# EUROPÄISCHE PATENTSCHRIFT

(11) **EP 2 833 093 B1**
(45) Veröffentlichungstag und Bekanntmachung des Hinweises auf die Patenterteilung: **23.03.2016**
(21) Anmeldenummer: 14177804.3
(22) Anmeldetag: 21.07.2014
(51) Int. Cl.: G01B 7/312, G01B 11/00

(54) **Verfahren und Vorrichtung zur Messung der Zentrizität eines Leiters in einer Isolierumhüllung**
Method and device for measuring the centricity of a conductor in an insulating sleeve
Procédé et dispositif de mesure du centrage d'un conducteur dans une gaine isolante

(30) Priorität: 29.07.2013 DE 102013012443
(43) Veröffentlichungstag der Anmeldung: 04.02.2015
(73) Patentinhaber: SIKORA AG, 28307 Bremen (DE)
(72) Erfinder: Sikora, Harald, 28357 Bremen (DE); Bremer, Klaus, 28879 Grasberg (DE)
(74) Vertreter: Hauck Patentanwaltspartnerschaft mbB

(56) Entgegenhaltungen:
- EP-B1- 1 495 284
- DE-C3- 2 517 709
- US-A- 5 528 141
- US-A1- 2008 282 565

## Beschreibung

Die Erfindung betrifft ein Verfahren zur Messung der Zentrizität eines Leiters in einer Isolierumhüllung, bei dem der durch den Leiter mit seiner Isolierumhüllung gebildete Strang entlang einer Förderrichtung bewegt wird. Außerdem betrifft die Erfindung eine entsprechende Vorrichtung.

Bekannt sind Messverfahren, bei denen in einer gemeinsamen Messebene mit einer induktiven Messeinrichtung die Lage des Leiters und mit einer optischen Messeinrichtung die Lage der den Leiter umgebenden Isolierumhüllung gemessen werden. Auf Grundlage beider Messungen wird die Zentrizität des Leiters in der Isolierumhüllung ermittelt. Problematisch bei einer solchen Ausgestaltung ist, dass die Messeinrichtungen sich aufgrund ihrer Anordnung in derselben Messebene gegenseitig im Wege stehen können. Dieser Umstand wird noch verstärkt, wenn, wie häufig erofrderlich, zwei optische Messeinrichtungen eingesetzt werden.

Aus DE 25 177 09 C3 ist das sogenannte WANDEXE-Exzentrizitätsmessgerät der Anmelderin bekannt mit zwei optischen Durchmesserprüfgeräten, die in einem Messkopf um 90° versetzt zueinander angeordnet sind, und einem in derselben Messebene wie die optischen Durchmesserprüfgeräte angeordneten induktiven Messkreis. Aus EP 1 495 284 B1 sind ein berührungsloses System und Verfahren zur Messung der Zentrizität und des Durchmessers eines Stranges bekannt. Dabei wird in einer optischen Messebene mittels einer optischen Messeinrichtung die Lage des Stranges gemessen. In einer ersten induktiven Messebene, die in Förderrichtung des Stranges vor der optischen Messebene liegt, wird mittels einer induktiven Messeinrichtung die Lage des Leiters gemessen. In einer zweiten induktiven Messebene, die in Förderrichtung des Stranges hinter der optischen Messebene liegt, wird mit einer zweiten induktiven Messeinrichtung ebenfalls die Lage des Leiters gemessen. Die induktiv gemessenen Lagen des Leiters werden derart miteinander in Beziehung gesetzt, dass sich eine Lage des Leiters in der optischen Messebene ergibt. Aus dieser ermittelten Lage des Leiters und der gemessenen Lage des Stranges in der optischen Messebene wird unter anderem die Zentrizität des Leiters in der Isolierumhüllung bestimmt.

US 2008/282565 A1 offenbart eine Vorrichtung zur Bestimmung der Mittenabweichung eines Leiters innerhalb einer Isolierumhüllung. Hierbei werden durch optische und magnetische Messeinrichtungen drei Messebenen definiert, die senkrecht auf der Förderrichtung des Leiters liegen. Wahlweise sind zwei Messebenen dafür vorgesehen, die Lage des Leiters festzustellen und eine Messebene dafür, die Lage der Isolierumhüllung festzustellen bzw. zwei Messebenen dafür vorgesehen, die Lage der Isolierumhüllung festzustellen und eine Messebene dafür, die Lage des Leiters festzustellen. US 5 528 141 A beschreibt ebenfalls eine Vorrichtung zur Bestimmung der mittigen Lage eines Leiters in einer Isolierumhüllung, welche zwei induktive Messmittel auf gegenüberliegenden Seiten des Leiters sowie ein optisches Messmittel vorsehen.

Bei den bekannten Systemen und Verfahren kommt es zu Messfehlern bei einer Krümmung des Stranges, häufig verursacht durch den Durchhang eines Leiters. So stimmt bei einer solchen Krümmung die aus den induktiven Messungen abgeleitete Lage des Leiters in der optischen Messebene nicht mit der tatsächlichen Lage des Leiters in der optischen Messebene überein. Sofern der Strang seine maximale Krümmung im Bereich der optischen Messebene besitzt, messen die induktiven Messeinrichtungen gleiche Lagen des Leiters. Diese entsprechen aber aufgrund der Krümmung des Stranges nicht der Lage des Leiters in der optischen Messebene. Zu derartigen Fehlern kommt es auch, wenn die Krümmung des Stranges sein Maximum nicht im Bereich der optischen Messebene, sondern in Förderrichtung versetzt zu dieser besitzt. In diesem Fall werden durch die induktiven Messeinrichtungen unterschiedliche Lagen des Leiters ermittelt. Allerdings stimmt auch in diesem Fall aufgrund der (unsymmetrischen) Krümmung eine abgeleitete Lage des Leiters in der optischen Messebene nicht mit der tatsächlichen Lage des Leiters überein. Durch die fehlerhaft bestimmten Lagen des Leiters in der optischen Messebene ist auch die ermittelte Zentrizität fehlerhaft.

Der Messfehler hängt von dem Krümmungsradius des Stranges ab. Beispielsweise bei einem Abstand von 2 m zwischen den Strang tragenden Stützrollen kann in der Praxis ein Krümmungsradius von beispielsweise 10 m auftreten. Hierdurch werden Messfehler im Bereich von 20 µm verursacht. Ein Ausgleich der Strangkrümmung durch eine größere Anzahl Stützrollen ist in der Praxis nicht möglich. Vielmehr ergibt sich dann ein letztlich wellenförmiger Verlauf des Stranges und damit eine undefinierte Messsituation, die zu einem unkalkulierbaren Fehler führt. Die Krümmung des Stranges kann auch nicht durch beliebige Erhöhung der auf den Strang ausgeübten Zugkraft vermieden werden. So erreichen der Strang und insbesondere sein Leiter vor einer vollständigen Eliminierung der Krümmung durch Strecken bereits die Fließgrenze.

Ausgehend von dem erläuterten Stand der Technik liegt der Erfindung die Aufgabe zugrunde, ein Verfahren und eine Vorrichtung der eingangs genannten Art bereitzustellen, mit denen auch bei einer Krümmung des Stranges die Zentrizität des Leiters in der Isolierumhüllung zuverlässig bestimmt werden kann.

Die Erfindung löst die Aufgabe durch die Gegenstände der unabhängigen Ansprüche 1 und 12. Vorteilhafte Ausgestaltungen finden sich in den abhängigen Ansprüchen, der Beschreibung und den Figuren.

Die Erfindung löst die Aufgabe einerseits durch ein Verfahren zur Messung der Zentrizität eines Leiters in einer Isolierumhüllung, bei dem der durch den Leiter mit seiner Isolierumhüllung gebildete Strang entlang einer Förderrichtung bewegt wird, umfassend die Schritte:
- in einer induktiven Messebene wird die Lage des Leiters mittels einer induktiven Messeinrichtung ermittelt,
- in einer ersten optischen Messebene, die in Förderrichtung des Stranges vor der induktiven Messebene liegt, wird mittels mindestens einer ersten optischen Messeinrichtung die Lage des Stranges ermittelt,
- in einer zweiten optischen Messebene, die in Förderrichtung des Stranges hinter der induktiven Messebene liegt, wird mittels mindestens einer zweiten optischen Messeinrichtung die Lage des Stranges ermittelt,
- die in der ersten und zweiten optischen Messebene ermittelten Lagen des Stranges werden derart miteinander in Beziehung gesetzt, dass sich eine Lage des Stranges in der induktiven Messebene ergibt, und
- aus dieser sich ergebenden Lage des Stranges in der induktiven Messebene und aus der in der induktiven Messebene ermittelten Lage des Leiters wird die Zentrizität des Leiters in der Isolierumhüllung bestimmt,
- wobei in der ersten optischen Messebene und/oder in der zweiten optischen Messebene eine ortsaufgelöste optische Messung einerseits senkrecht zur Förderrichtung und andererseits in Förderrichtung derart erfolgt, dass eine Schräglage und/oder eine Krümmung des Stranges gegenüber der Förderrichtung in der ersten optischen Messebene und/oder in der zweiten optischen Messebene erkannt wird, wobei eine solche Schräglage und/oder Krümmung bei der Bestimmung der Zentrizität des Leiters in der Isolierumhüllung berücksichtigt wird.

Die Erfindung löst die Aufgabe andererseits durch eine Vorrichtung zur Messung der Zentrizität eines Leiters in einer Isolierumhüllung, in der der durch den Leiter mit seiner Isolierumhüllung gebildete Strang entlang einer Förderrichtung bewegt wird, umfassend:
- eine in einer induktiven Messebene angeordnete induktive Messeinrichtung zur Ermittlung der Lage des Leiters in der induktiven Messebene,
- mindestens eine in einer ersten optischen Messebene, die in Förderrichtung des Stranges vor der induktiven Messebene liegt, angeordnete erste optische Messeinrichtung zur Ermittlung der Lage des Stranges in der ersten optischen Messebene,
- mindestens eine in einer zweiten optischen Messebene, die in Förderrichtung des Stranges hinter der induktiven Messebene liegt, angeordnete zweite optische Messeinrichtung zur Ermittlung der Lage des Stranges in der zweiten optischen Messebene,
- eine Auswerteeinrichtung, die dazu ausgebildet ist, die in der ersten und zweiten optischen Messebene ermittelten Lagen des Stranges derart miteinander in Beziehung zu setzen, dass sich eine Lage des Stranges in der induktiven Messebene ergibt, und aus dieser sich ergebenden Lage des Stranges in der induktiven Messebene und aus der in der induktiven Messebene ermittelten Lage des Leiters die Zentrizität des Leiters in der Isolierumhüllung zu bestimmen,
- wobei die mindestens eine erste optische Messeinrichtung und/oder die mindestens eine zweite optische Messeinrichtung dazu ausgebildet sind, in der ersten optischen Messebene und/oder in der zweiten optischen Messebene eine ortsaufgelöste optische Messung einerseits senkrecht zur Förderrichtung und andererseits in Förderrichtung derart durchzuführen, dass eine Schräglage und/oder eine Krümmung des Stranges gegenüber der Förderrichtung in der ersten optischen Messebene und/oder in der zweiten optischen Messebene erkannt wird, und wobei die Auswerteeinrichtung weiter dazu ausgebildet ist, eine solche Schräglage und/oder Krümmung bei der Bestimmung der Zentrizität des Leiters in der Isolierumhüllung zu berücksichtigen.

Der elektrische Leiter ist in bekannter Weise von einer Isolierumhüllung umgeben, die zum Beispiel in einem Extrusionsverfahren aufgebracht wurde. Der Leiter mit seiner Isolierumhüllung bildet einen Strang, der entlang einer Förderrichtung bewegt wird. Das Fördern des Stranges erfolgt dabei grundsätzlich entlang einer geraden Förderrichtung. Wie eingangs erläutert, kommt es in der Praxis jedoch unvermeidlich zu Abweichungen der Strangbewegung von der geraden Förderrichtung, insbesondere zu einer Krümmung des Stranges. Dies kann sowohl ein Durchhang als auch eine nach oben gewölbte Krümmung des Stranges sein.

Um dennoch zuverlässig die Zentrizität des Leiters in der Isolierumhüllung bestimmen zu können, erfolgt erfindungsgemäß gegenüber dem oben erläuterten Messprinzip aus dem Stand der Technik einerseits eine Umkehrung. So wird erfindungsgemäß jeweils eine optische Messung der Lage des Stranges vor und hinter einer induktiven Messebene durchgeführt und hieraus eine Lage des Stranges in der induktiven Messebene ermittelt. Aus dieser Lage des Stranges und der in der induktiven Messebene induktiv gemessenen Lage des Leiters wird die Zentrizität bestimmt. Das Ermitteln der Zentrizität kann grundsätzlich wie an sich aus dem Stand der Technik bekannt erfolgen. Insbesondere kann die induktiv gemessene Lage des Leiters in der induktiven Messebene dazu in aus dem Stand der Technik bekannter Weise mit der ermittelten Lage des Stranges in der induktiven Messebene in Beziehung gesetzt werden. Bei den induktiven Sensoren kann es sich insbesondere um passive induktive Sensoren handeln. Dabei kann eine hochfrequente Wechselspannung in dem Leiter erzeugt werden, beispielsweise induziert werden, die in dem Leiter einen hochfrequenten Wechselstrom erzeugt. Die von dem hochfrequenten Wechselstrom erzeugten magnetischen Wechselfelder werden dann von den passiven induktiven Sensoren gemessen.

Durch die Umkehrung des Messprinzips gegenüber dem oben erläuterten Stand der Technik wird das erfindungsgemäße Prinzip ermöglicht, eine ortsaufgelöste optische Messung in zumindest einer der optischen Messebenen, bevorzugt in beiden optischen Messebenen durchzuführen, so dass eine eventuelle Schräglage oder Krümmung des Stranges in der ersten und/oder zweiten optischen Messebene erkannt wird. Es kann also zur Erhöhung der Genauigkeit insbesondere in der ersten optischen Messebene und in der zweiten optischen Messebene jeweils eine ortsaufgelöste optische Messung derart erfolgen, dass eine Schräglage und/oder eine Krümmung des Stranges gegenüber der Förderrichtung, insbesondere in der ersten optischen Messebene und in der zweiten Messebene, erkannt wird. Mindestens eine der optischen Messeinrichtungen, bevorzugt beide optischen Messeinrichtungen messen ortsaufgelöst einerseits senkrecht zur Förderrichtung und andererseits in Förderrichtung die Lage des Stranges, insbesondere die Lage der Kanten der Isolierumhüllung, also zweidimensional ortsaufgelöst. Es kann eine an sich bekannte Schattenkantenmessung erfolgen, bei der die Schattengrenzen der Isolierumhüllung auf optische Sensoren abgebildet werden. Die Ermittlung der Kantenlagen kann durch eine an sich bekannte Beugungssaumanalyse erfolgen, wie sie zum Beispiel in EP 0 924 493 B1 beschrieben ist. Aus den auch in Förderrichtung des Stranges ortsaufgelöst ermittelten Kantenlagen der Isolierumhüllung kann eine Schräglage oder Krümmung des Stranges im Bereich der ersten oder zweiten optischen Messebene erkannt werden. Diese kann bei der Ermittlung der Zentrizität berücksichtigt werden. Es ist also möglich, Messfehler aufgrund einer Krümmung des Stranges bei der Auswertung zu kompensieren.

Es kann auf Grundlage einer in der ersten optischen Messebene und/oder in der zweiten optischen Messebene erkannten Schräglage und/oder Krümmung des Stranges gegenüber der Förderrichtung eine korrigierte Lage des Stranges in der induktiven Messebene erstellt werden, auf deren Grundlage die Zentrizität des Leiters in der Isolierumhüllung bestimmt wird. Bei dieser Ausgestaltung wird also eine anhand der erkannten Schräglage und/oder Krümmung des Stranges korrigierte Lage des Stranges in der induktiven Messebene zugrunde gelegt. Ein beispielsweise durch einen Durchhang und eine damit erzeugte Krümmung bewirkter Messfehler wird kompensiert.

Erfindungsgemäß wird nicht versucht, eine Krümmung des Stranges durch zusätzliche Maßnahmen zu verhindern, da dies wie eingangs erläutert ohnehin nicht vollständig gelingt und eine undefinierte Messsituation schafft. Vielmehr wird die Krümmung des Stranges akzeptiert, allerdings messtechnisch erkannt und bei der anschließenden Auswertung berücksichtigt. Es liegt erfindungsgemäß eine eindeutig definierte Messsituation vor und die auf dieser Grundlage ermittelte Zentrizität des Leiters in der Isolierumhüllung ist jederzeit zuverlässig.

Nach einer weiteren Ausgestaltung kann vorgesehen sein, aus der in der ersten optischen Messebene und/oder in der zweiten optischen Messebene durchgeführten optischen Messung ein Krümmungsradius oder Krümmungsdurchmesser des Stranges ermittelt wird, auf dessen Grundlage die korrigierte Lage des Stranges in der induktiven Messebene erstellt wird. Bei dieser Ausgestaltung wird näherungsweise angenommen, dass eine Krümmung des Stranges beispielsweise aufgrund eines Durchhangs zumindest in dem durch die optischen Messebenen begrenzten Messabschnitt entlang einer Kreisform verläuft. Die Annahme eines kreisförmigen Verlaufs führt zu einer eindeutig definierten Messsituation und kann im Zuge der Auswertung in einfacher und schneller Weise berücksichtigt werden. Außerdem hat sich gezeigt, dass die näherungsweise Annahme eines kreisförmigen Verlaufs zu zuverlässigen Messergebnissen führt.

Nach einer weiteren Ausgestaltung kann vorgesehen sein, dass der Krümmungsradius oder Krümmungsdurchmesser des Stranges ermittelt wird, indem ein Kreis gebildet wird, zu dem in der ersten optischen Messebene und/oder in der zweiten optischen Messebene erkannte Krümmungen des Stranges Kreissegmente bilden, wobei als Krümmungsradius oder Krümmungsdurchmesser der Radius oder Durchmesser dieses Kreises gewählt wird. Als Mittelpunkt des Kreises dient ein Schnittpunkt zweier Radialen zu den gemessenen Krümmungen des Stranges in der ersten und zweiten optischen Messebene. Ein solcher Kreis kann geometrisch aus drei auf dem Kreis liegenden Punkten bestimmt werden. Damit ist es für die Bestimmung des Kreises grundsätzlich ausreichend, wenn in einer der beiden optischen Messebenen eine zweidimensional ortsauflösende Messung erfolgt (zum Beispiel mit einem zweizeiligen optischen Sensor), während in der jeweils anderen optischen Messebene nur eine eindimensional ortsauflösende Messung erfolgt (zum Beispiel mit einem einzeiligen optischen Sensor). Zur Verbesserung der Genauigkeit bei der Bestimmung des Kreises ist es allerdings bevorzugt, wenn in beiden optischen Messebenen jeweils eine zweidimensional ortsauflösende Messung erfolgt (zum Beispiel mit jeweils einem zweizeiligen optischen Sensor).

Weiter kann vorgesehen sein, dass der Krümmungsradius oder Krümmungsdurchmesser bei einer in der ersten optischen Messebene und/oder in der zweiten optischen Messebene erkannten Schräglage des Stranges ermittelt wird, indem jeweils eine Senkrechte auf die ermittelten Schräglagen des Stranges erstellt wird und der Schnittpunkt der Senkrechten als Mittelpunkt eines Kreises gewählt wird, zu dem die erkannten Schräglagen des Stranges jeweils Tangenten oder Sehnen bilden, wobei als Krümmungsradius oder Krümmungsdurchmesser der Radius oder Durchmesser dieses Kreises gewählt wird.

Die Radialen zu ggf. erkannten Krümmungen des Stranges in der ersten und zweiten optischen Messebene bzw. die Senkrechten auf ggf. in der ersten und zweiten optischen Messebene erkannten Schräglagen des Stranges schneiden sich in einem Punkt. Dieser Schnittpunkt wird bei den vorgenannten Ausgestaltungen als Zentrum eines Kreises angenommen, zu dem die gemessenen Krümmungen des Stranges Kreissegmente bzw. die gemessenen Schräglagen des Stranges Tangenten oder Sehnen bilden. Die Tangenten liegen dabei an dem Schnittpunkt der Senkrechten mit den gemessenen Schräglagen des Stranges an. Sofern Sehnen gebildet werden, verlaufen diese zwischen den gemessenen Endpunkten der Schräglagen. Es wird also derjenige Kreis rechnerisch ermittelt, der den Verlauf des Stranges, insbesondere seine Krümmung, zumindest in dem durch die optischen Messebenen begrenzten Messabschnitt möglichst gut annähert. Anhand des Durchmessers bzw.

Radius dieses Kreises kann die Lage des Stranges an im Wesentlichen beliebigen Punkten zwischen den optischen Messebenen, also insbesondere in der induktiven Messebene, rechnerisch ermittelt werden. Auf Grundlage dieser Lage des Stranges kann dann zuverlässig anhand der Ergebnisse der induktiven Messeinrichtung die Zentrizität des Leiters in der Isolierumhüllung bestimmt werden. Die oben erläuterten Rechenoperationen sind dem Fachmann an sich bekannt.

Die induktive Messebene und/oder die erste optische Messebene und/oder die zweite optische Messebene können senkrecht zu der Förderrichtung des Stranges liegen. Es erfolgt also jeweils eine Messung in einer Richtung senkrecht zur Förderrichtung des Stranges. In der vorliegenden Anmeldung wird von Messebenen gesprochen. Es sei darauf hingewiesen, dass insbesondere aufgrund der auch in Förderrichtung ortsaufgelösten optischen Messung tatsächlich in in Förderrichtung ausgedehnten Messbereichen gemessen wird. Dies gilt aufgrund der räumlichen Ausdehnung der induktiven Messeinrichtung auch für die induktive Messebene. Dabei kann jeweils eine in Förderrichtung gesehen mittig in dem Messbereich liegende Ebene als Messebene angenommen werden.

Der Strang kann entlang seiner Förderrichtung durch mehrere Stützelemente, vorzugsweise mehrere Stützrollen, abgestützt werden, wobei die der induktiven Messebene unmittelbar vorausgehenden und unmittelbar nachfolgenden Stützelemente spiegelsymmetrisch zu der induktiven Messebene angeordnet werden können. Durch eine solche in Bezug auf die induktive Messebene symmetrische Anordnung der Stützelemente wird die maximale Krümmung des Stranges im Bereich der induktiven Messebene erzeugt. Die optischen Messeinrichtungen messen dann in den optischen Messebenen Schräglagen bzw. Krümmungen, die spiegelsymmetrisch zu der induktiven Messebene sind. Der beispielsweise in der oben erläuterten Weise ermittelte Kreismittelpunkt liegt in der induktiven Messebene. Dies vereinfacht die Auswertung. Sofern beispielsweise aus konstruktiven Gründen die maximale Krümmung des Stranges nicht in der induktiven Messebene liegt, kann dies ebenfalls im Zuge der Auswertung berücksichtigt werden. Die optischen Messeinrichtungen messen dann nicht-spiegelsymmetrische Lagen des Stranges in den beiden optischen Messebenen. Der in der oben erläuterten Weise ermittelte Kreismittelpunkt liegt in Förderrichtung gesehen vor oder hinter der induktiven Messebene.

Weiterhin kann vorgesehen sein, dass die mindestens eine erste optische Messeinrichtung und/oder die mindestens zweite optische Messeinrichtung (jeweils) mindestens eine optische Strahlungsquelle und (jeweils) mindestens einen zweidimensional ortsauflösenden optischen Sensor umfassen. Die zweidimensional ortsauflösenden optischen Sensoren können zum Beispiel aus (jeweils) mindestens zwei nebeneinander angeordneten optischen Sensorzeilen gebildet werden. Es ist auch die Verwendung eines zweidimensionalen Sensor-Arrays mit mehr als zwei Sensorzeilen möglich. Auch anderweitige Bildsensoren können zum Einsatz kommen. Entscheidend ist, dass eine zweidimensionale ortsaufgelöste Messung und damit eine Erkennung einer Schräglage und/oder Krümmung des Stranges in einer oder beiden optischen Messebenen möglich ist. Erfindungsgemäß können in der ersten und zweiten optischen Messebene auch jeweils zwei oder mehr als zwei, beispielsweise drei oder vier, optische Messeinrichtungen vorgesehen sein, die jeweils um einen bestimmten Winkel, zum Beispiel 90°, 60° oder 45° zueinander versetzt angeordnet sind. Es können dann alle optischen Messeinrichtungen einer oder beider optischen Messebenen zweidimensional ortsauflösend messen. Auch können in der induktiven Messebene mehr als eine induktive Messeinrichtung, beispielsweise zwei induktive Messeinrichtungen vorgesehen sein, die um einen Winkel von zum Beispiel 90° versetzt zueinander messen. Auf diese Weise kann die Zentrizität des Leiters in der Isolierumhüllung in mehreren Richtungen um den Strang herum gemessen werden. Bei ausreichender Anzahl von optischen Messeinrichtungen kann auch eine Ovalität des Stranges erkannt werden. Die Wahl der optischen Messeinrichtung und insbesondere der optischen Sensoren hat Einfluss auf die Frage, ob die optischen Messeinrichtungen zwischen einer Schräglage und einer Krümmung unterscheiden können. Dies hängt von der Ortsauflösung der optischen Messung insbesondere in Förderrichtung des Stranges ab. Sofern die optischen Messeinrichtungen jeweils nur einen aus zwei nebeneinander angeordneten und mit ihrer Längserstreckung senkrecht zur Förderrichtung des Stranges ausgerichteten Sensorzeilen gebildeten optischen Sensor umfassen, wird auch bei einer Krümmung des Stranges eine Schräglage gemessen, da in Förderrichtung jeweils nur zwei Messfelder vorliegen. Anders verhält sich dies bei einer größeren Ortsauflösung in Förderrichtung, also wenn die optischen Sensoren beispielsweise ein zweidimensionales Sensor-Array aus mehr als zwei nebeneinander angeordneten Zeilensensoren umfassen. Dann kann eine Krümmung des Stranges gemessen werden.

Natürlich können auch in jeder der optischen Messebenen mehrere optische Strahlungsquellen und mehrere optische Sensoren vorgesehen sein, beispielsweise jeweils um 90° versetzt zueinander. Damit können zusätzliche Vereinfachungen bei der Auswertung erreicht werden, wie dies grundsätzlich in EP 0 924 493 B1 beschrieben ist. Wie darüber hinaus an sich bekannt, kann die induktive Messeinrichtung mindestens zwei induktive Messspulen umfassen, die in der induktiven Messebene paarweise zueinander angeordnet sind.

Ein Ausführungsbeispiel der Erfindung wird nachfolgend anhand von Figuren näher erläutert. Es zeigen schematisch:
- Figur 1: eine erfindungsgemäße Vorrichtung in einer ersten Messsituation,
- Figur 2: die Vorrichtung aus Figur 1 in einer zweiten Messsituation,
- Figur 3: die Vorrichtung aus Figur 1 in einer dritten Messsituation,
- Figur 4: eine vergrößerte Darstellung eines Teils aus Figur 3,
- Figur 5: eine weitere Messsituation, und
- Figur 6: ein Diagramm zur Veranschaulichung des Messfehlers bei einer Krümmung eines vermessenen Stranges.

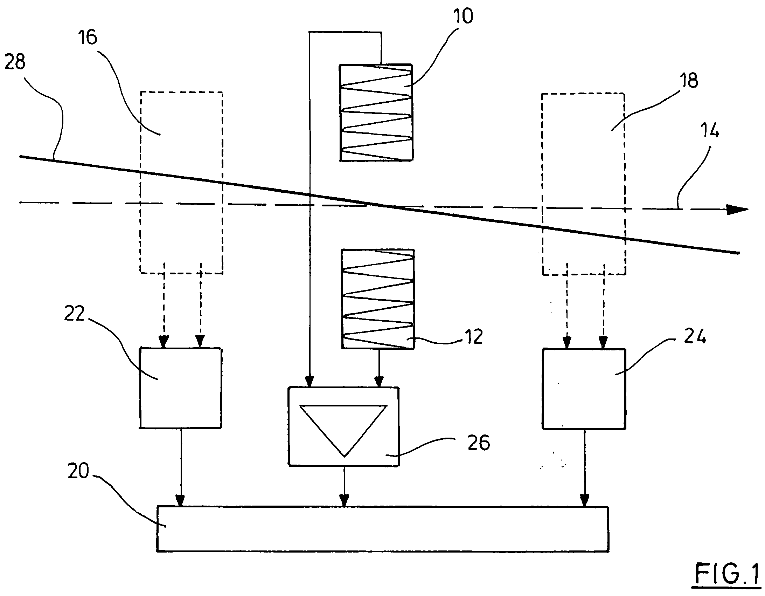

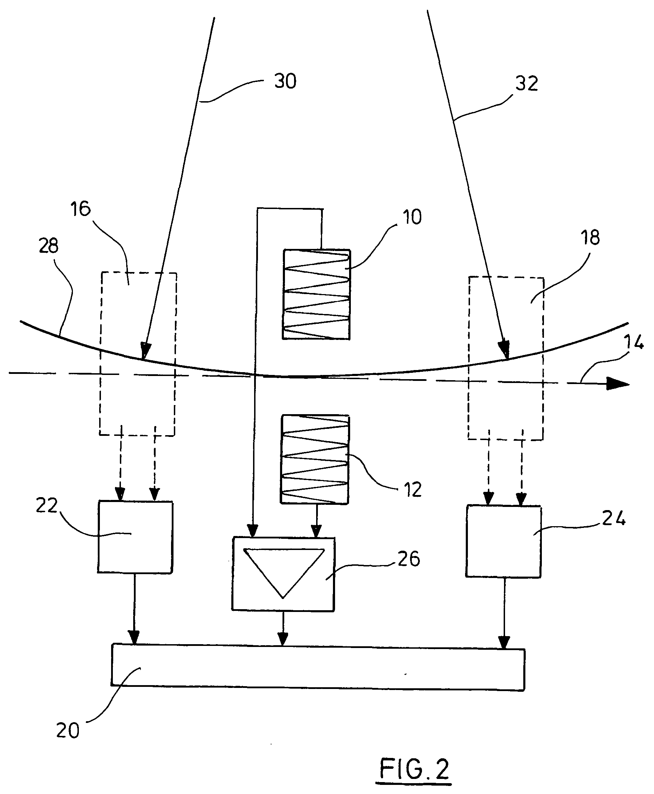

Soweit nichts anderes angegeben ist, bezeichnen in den Figuren gleiche Bezugszeichen gleiche Gegenstände. Die in den Figuren 1 und 2 gezeigte erfindungsgemäße Vorrichtung weist eine in einer induktiven Messebene angeordnete induktive Messeinrichtung auf, die in dem gezeigten Beispiel eine obere induktive Messspule 10 und eine untere induktive Messspule 12 umfasst, die paarweise zueinander angeordnet sind. Zwischen den Messspulen 10, 12 verläuft mittig eine in Figur 1 gestrichelt dargestellte vorgesehene Förderrichtung 14 eines Stranges 28, gebildet aus einem elektrischen Leiter mit einer Isolierumhüllung. In Förderrichtung vor den induktiven Messspulen 10, 12 befindet sich in einer ersten optischen Messebene eine erste optische Messeinrichtung 16. In Förderrichtung hinter den induktiven Messspulen 10, 12 befindet sich in einer zweiten optischen Messebene einen zweite optische Messeinrichtung 18. Die optischen Messeinrichtungen 16, 18 umfassen mindestens eine optische Strahlungsquelle und mindestens einen zweidimensional ortsauflösenden optischen Sensor, gebildet beispielsweise aus zwei oder mehr nebeneinander angeordneten Sensorzeilen. Wie in Figur 1 zu erkennen, sind die induktive Messeinrichtung und die optischen Messeinrichtungen jeweils in Förderrichtung 14 des Stranges 28 gesehen räumlich ausgedehnt. Die jeweiligen Messebenen liegen jeweils in Bezug auf die räumliche Ausdehnung der Messeinrichtungen mittig zu diesen und senkrecht zu der Förderrichtung 14. Die Förderrichtung 14 bildet gleichzeitig die Symmetrieachse der Messeinrichtungen. Die erfindungsgemäße Vorrichtung umfasst darüber hinaus eine bei dem Bezugszeichen 20 gezeigte Auswerteeinrichtung, zu der weiterhin eine Einrichtung 22 zur Ermittlung der Lage der Kanten des Stranges in der ersten optischen Messebene und eine Einrichtung 24 zur Ermittlung der Lage der Kanten des Stranges in der zweiten optischen Messebene gehört.

In an sich bekannter Weise wird durch die Messspulen 10, 12 der induktiven Messeinrichtung in der induktiven Messebene die Lage des Leiters gemessen. Dazu werden die jeweiligen Messergebnisse der Messspulen 10, 12 über einen Verstärker 26 der Auswerteeinrichtung 20 übermittelt, die aus den Messdaten die Lage des Leiters in der induktiven Messebene bestimmt. Darüber hinaus wird durch die erste optische Messeinrichtung 16 und durch die zweite optische Messeinrichtung 18 jeweils die Lage des Stranges in der ersten optischen Messebene bzw. der zweiten optischen Messebene gemessen. Dies kann in an sich bekannter Weise durch eine Beugungssaumanalyse der auf die optischen Sensoren der optischen Messeinrichtungen abgebildeten Schattengrenzen des Stranges 28 geschehen, wie beispielsweise in EP 0 924 493 B1 beschrieben. Die Auswerteeinrichtung 20 bestimmt aus den durch die erste und zweite optische Messeinrichtung 16, 18 ermittelten Lagen des Stranges in der ersten bzw. zweiten optischen Messebene eine Lage des Stranges in der induktiven Messebene. Hieraus wiederum ermittelt die Auswerteeinrichtung 20 in an sich bekannter Weise die Zentrizität des Leiters in der Isolierumhüllung.

In dem in Figur 1 gezeigten Beispiel ist ein Strang bei dem Bezugszeichen 28 dargestellt. In der aus Veranschaulichungsgründen übertriebenen Darstellung verläuft der Strang 28 zwar entlang einer Geraden, diese verläuft jedoch schräg zu der eigentlich vorgesehenen Förderrichtung 14. In dem in Figur 1 gezeigten Messbeispiel werden durch die ersten und zweiten optischen Messeinrichtungen Schräglagen des Stranges 28 ermittelt, die in dem dargestellten Beispiel entlang einer Geraden angeordnet sind. In diesem Messzustand kann die Lage des Stranges 28 in der induktiven Messebene beispielsweise durch Interpolation zwischen den gemessenen Schräglagen bestimmt werden. Die in Figur 1 dargestellte Messsituation kann grundsätzlich auch mit Vorrichtungen des Standes der Technik bewältigt werden.

Figur 2 zeigt dagegen eine Messsituation, die bei konventionellen Systemen zu einem undefinierten Messfehler führt. In Figur 2 ist zu erkennen, dass der Strang 28 einen wiederum aus Veranschaulichungsgründen übertrieben dargestellten Durchhang und damit eine Krümmung besitzt. Wie oben erläutert, ist dies praktisch nicht zu vermeiden. In dem in Figur 2 gezeigten Beispiel sind nicht gezeigte, den Strang 28 anlagenbedingt abstützende Stützelemente in größeren Abständen von wenigen Metern, beispielsweise Stützrollen, spiegelsymmetrisch zu der induktiven Messebene angeordnet. Hierdurch wird erreicht, dass der maximale Durchhang des Stranges 28 im Bereich der induktiven Messebene liegt. Wie sich unmittelbar aus der Darstellung der Figur 2 ergibt, messen die ersten und zweiten optischen Messeinrichtungen wiederum jeweils eine Schräglage bzw. Krümmung in Bezug auf die eigentlich gewünschte Förderrichtung 14. Die Frage, ob die optischen Messeinrichtungen jeweils zwischen einer Schräglage und einer Krümmung unterscheiden können, hängt wie oben erläutert von der Ortsauflösung der optischen Messeinrichtungen ab. Der Durchhang des Stranges 28 führt zu Messergebnissen der optischen Messeinrichtungen, die in Bezug auf die induktive Messebene gespiegelt sind.

Zur Auswertung kann rechnerisch jeweils eine Radiale bzw. Senkrechte zu den von den optischen Messeinrichtungen gemessenen gekrümmten bzw. schrägen Abschnitten erstellt und ein Schnittpunkt dieser Senkrechten bzw. Radialen als Mittelpunkt eines Kreises bestimmt werden. Die Senkrechten bzw. Radialen sind in Figur 2 bei den Bezugszeichen 30, 32 gezeigt. Der Kreis wird ausgehend von diesem Mittelpunkt so gewählt, dass die von den optischen Messeinrichtungen gemessenen schrägen bzw. gekrümmten Abschnitte Segmente des Kreises bzw. Sehnen an den Kreis bilden. Anschließend wird ebenfalls von der Auswerteeinrichtung 20 ein Durchmesser oder Radius des Kreises bestimmt. Auf dieser Grundlage kann unter Berücksichtigung des maximalen Durchhangs im Bereich der induktiven Messebene eine anhand des Durchhangs korrigierte Lage des Stranges in der induktiven Messebene ermittelt werden. Diese korrigierte Lage des Stranges bildet die Basis für die ebenfalls durch die Auswerteeinrichtung 20 durchgeführte Zentrizitätsbestimmung des Leiters in der Isolierumhüllung.

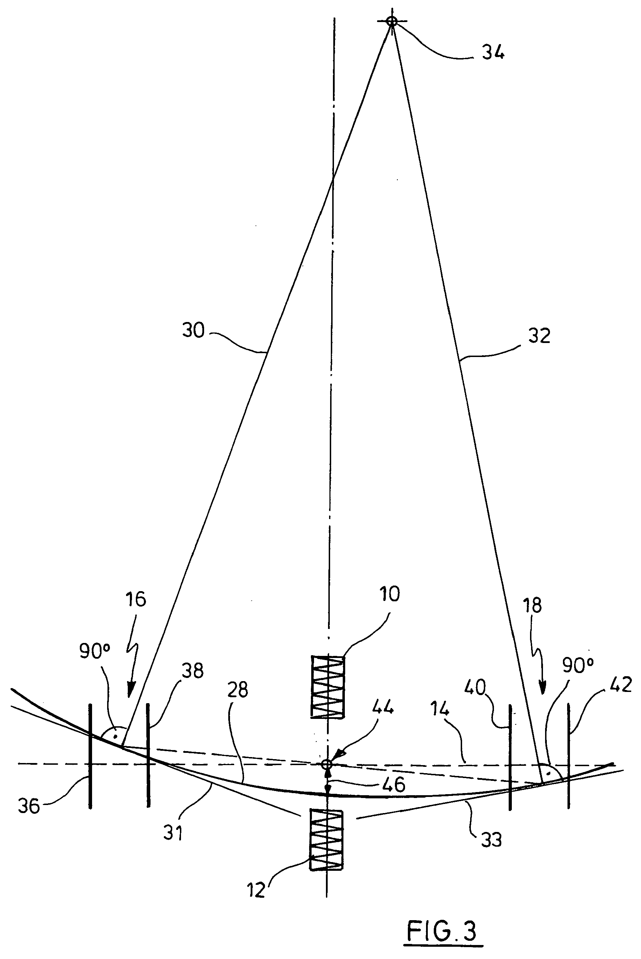

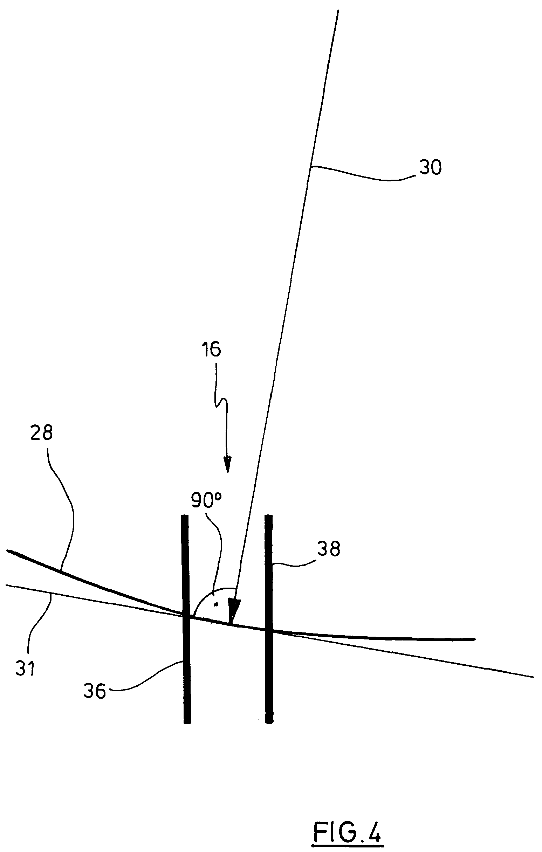

In den Figuren 3 und 4 ist eine Messsituation dargestellt, die weitgehend der in Figur 2 gezeigten und oben erläuterten Messsituation entspricht. Im Unterschied zu der Messsituation der Figur 2 liegt bei dem Beispiel der Figuren 3 und 4 die maximale Krümmung bzw. der maximale Durchhang des Stranges 28 allerdings nicht im Bereich der induktiven Messebene, sondern seitlich versetzt dazu, insbesondere seitlich neben der zur Förderrichtung 14 senkrechten Mittenachse des induktiven Messkopfes. Der Mittelpunkt 34 eines anhand der Senkrechten bzw. Radialen 30, 32 gebildeten Kreises liegt also ebenfalls seitlich versetzt zu der induktiven Messebene. In Figur 3 zeigen die Senkrechten bzw. Radialen 30, 32 den Krümmungsradius des Stranges 28 an. Die Sehnen zu dem gebildeten Kreis sind in den Figuren 3 und 4 bei den Bezugszeichen 31 und 33 zu erkennen. Auf diesen Sehnen 31, 33 stehen die Senkrechten bzw. Radialen 30, 32 jeweils unter einem Winkel von 90°. In den Figuren 3 und 4 sind auch jeweils zwei senkrecht zur Förderrichtung 14 des Stranges 28 ausgerichtete optische Sensorzeilen 36, 38 und 40, 42 der optischen Messeinrichtungen 16 und 18 zu erkennen. Die Sehnen 31, 33 wurden dabei jeweils zwischen den Sensorzeilen 36 und 38 bzw. 40 und 42 gebildet. Anstelle der Sehnen 31, 33 können im Schnittpunkt der Senkrechten bzw. Radialen 30, 32 auch Tangenten an die Krümmung des Stranges 28 angelegt werden. Das Bezugszeichen 44 zeigt die geometrische Mitte zwischen den optischen Messeinrichtungen 16, 18 an, die der Lage des Stranges 28 zwischen den optischen Messeinrichtungen 16, 18 entsprechen würde, wenn der Strang 28 nicht gekrümmt wäre. Aufgrund der Krümmung weicht die tatsächliche Lage des Stranges 28 jedoch von der geometrischen Mitte 44 ab, wie bei dem Bezugszeichen 46 veranschaulicht. Dieser Messfehler wird erfindungsgemäß kompensiert.

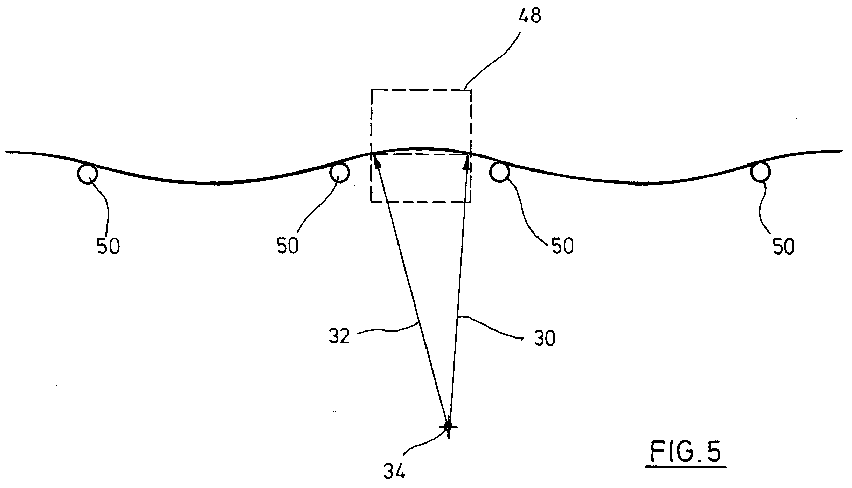

In Figur 5 ist zur Veranschaulichung sehr schematisch eine weitere Messsituation gezeigt, bei der der Strang 28 im Bereich der Messeinrichtungen (Messbereich der optischen und induktiven Messeinrichtungen in Figur 5 schematisch bei dem Bezugszeichen 48 gezeigt) keinen Durchhang besitzt, sondern eine Wölbung nach oben, bedingt durch die Anordnung der den Strang 28 stützenden Stützrollen 50. So zeigt Figur 5 neben üblicherweise und beispielsweise bei den Ausführungen der Figuren 1 bis 4 vorgesehenen (äußeren) Stützrollen 50 weitere (innere) Stützrollen 50, die relativ kurz vor und hinter dem Messbereich 48 der optischen und induktiven Messeinrichtungen angeordnet sind. Diese zusätzlichen Stützrollen 50 können zu der in Figur 5 zu erkennenden Wölbung des Strangs 28 nach oben führen. Auch eine solche Messsituation kann erfindungsgemäß sicher und zuverlässig bewältigt werden.

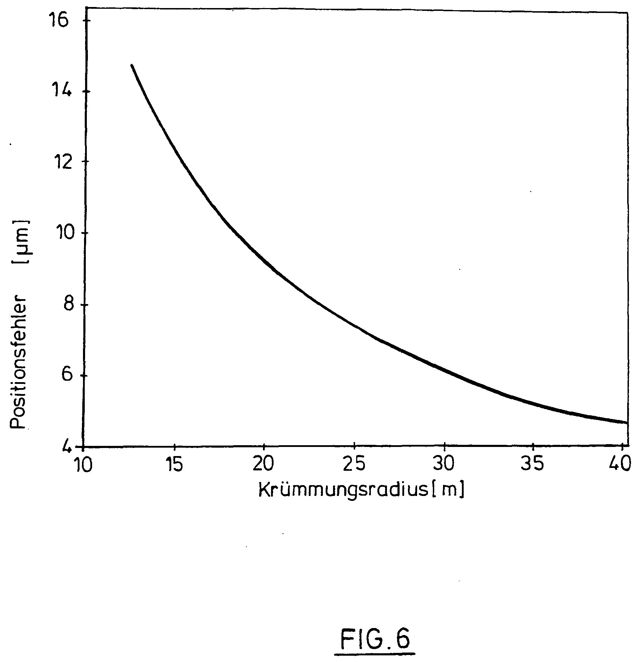

Neben geometrischen Fehlern, wie in den Figuren 1 bis 5 veranschaulicht, entstehen bei einer Krümmung des Leiters zusätzliche Messfehler, verursacht durch eine Verdichtung der von den induktiven Sensoren gemessenen magnetischen Feldstärken in Richtung der Krümmung. Dadurch sind die Messungen der induktiven Sensoren mit einem zusätzlichen durch die Leiterkrümmung erzeugten Messfehler behaftet. Figur 6 zeigt einen Zusammenhang zwischen dem Krümmungsradius eines durchhängenden Stranges und dem sich ergebenden Messfehler bei einer herkömmlichen Ermittlung der Zentrizität des Leiters in der Isolierumhüllung. Es ist zu erkennen, dass der auf der Ordinate in µm aufgetragene Messfehler exponentiell mit einer Abnahme des auf der Abszisse aufgetragenen Krümmungsradius in Metern zunimmt. Wie eingangs erläutert, sind Krümmungsradien von 10 m durchaus realistisch. Der aufgetragene Messfehler ergibt sich auf Grundlage einer induktiven Bestimmung der Lage des Leiters nach dem Biot-Savart-Gesetz. Zugrunde gelegt wurde ein induktiver Sensor mit einer Sensorfläche von 16 mm (Breite) x 6 mm (Höhe) bei einem Abstand zwischen der Sensorunterkante und der die Messkopfachse definierenden Förderrichtung 14 von 10 mm. Auch solche Messfehler können mit dem erfindungsgemäßen Verfahren bzw. der erfindungsgemäßen Vorrichtung und der hiermit erreichten Erkennung einer Leiterkrümmung zuverlässig vermieden werden.

## Patentansprüche

1. Verfahren zur Messung der Zentrizität eines Leiters in einer Isolierumhüllung, bei dem der durch den Leiter mit seiner Isolierumhüllung gebildete Strang (28) entlang einer Förderrichtung (14) bewegt wird, umfassend die Schritte:
- in einer induktiven Messebene wird die Lage des Leiters mittels einer induktiven Messeinrichtung ermittelt,
- in einer ersten optischen Messebene, die in Förderrichtung (14) des Stranges (28) vor der induktiven Messebene liegt, wird mittels mindestens einer ersten optischen Messeinrichtung (16) die Lage des Stranges (28) ermittelt,
- in einer zweiten optischen Messebene, die in Förderrichtung (14) des Stranges (28) hinter der induktiven Messebene liegt, wird mittels mindestens einer zweiten optischen Messeinrichtung (18) die Lage des Stranges (28) ermittelt,
- die in der ersten und zweiten optischen Messebene ermittelten Lagen des Stranges (28) werden derart miteinander in Beziehung gesetzt, dass sich eine Lage des Stranges (28) in der induktiven Messebene ergibt, und
- aus dieser sich ergebenden Lage des Stranges (28) in der induktiven Messebene und aus der in der induktiven Messebene ermittelten Lage des Leiters wird die Zentrizität des Leiters in der Isolierumhüllung bestimmt,
- wobei in der ersten optischen Messebene und/oder in der zweiten optischen Messebene eine ortsaufgelöste optische Messung einerseits senkrecht zur Förderrichtung und andererseits in Förderrichtung derart erfolgt, dass eine Schräglage und/oder eine Krümmung des Stranges (28) gegenüber der Förderrichtung (14) in der ersten optischen Messebene und/oder in der zweiten optischen Messebene erkannt wird, wobei eine solche Schräglage und/oder Krümmung bei der Bestimmung der Zentrizität des Leiters in der Isolierumhüllung berücksichtigt wird.

2. Verfahren nach Anspruch 1, **dadurch gekennzeichnet, dass** in der ersten optischen Messebene und in der zweiten optischen Messebene jeweils eine ortsaufgelöste optische Messung derart erfolgt, dass eine Schräglage und/oder eine Krümmung des Stranges gegenüber der Förderrichtung, insbesondere in der ersten optischen Messebene und in der zweiten Messebene, erkannt wird.

3. Verfahren nach Anspruch 1 oder Anspruch 2, **dadurch gekennzeichnet, dass** auf Grundlage einer in der ersten optischen Messebene und/oder in der zweiten optischen Messebene erkannten Schräglage und/oder Krümmung des Stranges (28) gegenüber der Förderrichtung (14) eine korrigierte Lage des Stranges (28) in der induktiven Messebene erstellt wird, auf deren Grundlage die Zentrizität des Leiters in der Isolierumhüllung bestimmt wird.

4. Verfahren nach einem der vorhergehenden Ansprüche, **dadurch gekennzeichnet, dass** aus der in der ersten optischen Messebene und/oder in der zweiten optischen Messebene durchgeführten optischen Messung ein Krümmungsradius oder Krümmungsdurchmesser des Stranges (28) ermittelt wird, auf dessen Grundlage die korrigierte Lage des Stranges (28) in der induktiven Messebene erstellt wird.

5. Verfahren nach Anspruch 4, **dadurch gekennzeichnet, dass** der Krümmungsradius oder Krümmungsdurchmesser des Stranges (28) ermittelt wird, indem ein Kreis gebildet wird, zu dem in der ersten optischen Messebene und/oder in der zweiten optischen Messebene erkannte Krümmungen des Stranges (28) Kreisbogensegmente bilden, wobei als Krümmungsradius oder Krümmungsdurchmesser der Radius oder Durchmesser des entsprechenden Kreises gewählt wird.

6. Verfahren nach Anspruch 5, **dadurch gekennzeichnet, dass** als Mittelpunkt des Kreises ein Schnittpunkt zweier Radialen zu den erkannten Krümmungen des Stranges (28) in der ersten optischen Messebene und/oder in der zweiten optischen Messebene gewählt wird.

7. Verfahren nach einem der Ansprüche 4 bis 6, **dadurch gekennzeichnet, dass** der Krümmungsradius oder Krümmungsdurchmesser bei einer in der ersten optischen Messebene und/oder in der zweiten optischen Messebene erkannten Schräglage des Stranges (28) ermittelt wird, indem jeweils eine Senkrechte auf die ermittelten Schräglagen des Stranges (28) erstellt wird und der Schnittpunkt der Senkrechten als Mittelpunkt eines Kreises gewählt wird, zu dem die ermittelten Schräglagen des Stranges (28) Tangenten oder Sehnen bilden, wobei als Krümmungsradius oder Krümmungsdurchmesser der Radius oder Durchmesser dieses Kreises gewählt wird.

8. Verfahren nach einem der vorhergehenden Ansprüche, **dadurch gekennzeichnet, dass** die induktive Messebene und/oder die erste optische Messebene und/oder die zweite optische Messebene senkrecht zu der Förderrichtung (14) des Stranges (28) liegen.

9. Verfahren nach einem der vorhergehenden Ansprüche, **dadurch gekennzeichnet, dass** der Strang (28) entlang seiner Förderrichtung (14) durch mehrere Stützelemente, vorzugsweise mehrere Stützrollen, abgestützt wird, wobei die der induktiven Messebene unmittelbar vorausgehenden und unmittelbar nachfolgenden Stützelemente spiegelsymmetrisch zu der induktiven Messebene angeordnet werden.

10. Verfahren nach einem der vorhergehenden Ansprüche, **dadurch gekennzeichnet, dass** die mindestens eine erste optische Messeinrichtung (16) und/oder die mindestens eine zweite optische Messeinrichtung (18) mindestens eine optische Strahlungsquelle und mindestens einen zweidimensional ortsauflösenden optischen Sensor umfassen.

11. Verfahren nach einem der vorhergehenden Ansprüche, **dadurch gekennzeichnet, dass** die induktive Messeinrichtung mindestens zwei induktive Messspulen (10, 12) umfasst, die in der induktiven Messebene paarweise zueinander angeordnet sind.

12. Vorrichtung zur Messung der Zentrizität eines Leiters in einer Isolierumhüllung, in der der durch den Leiter mit seiner Isolierumhüllung gebildete Strang (28) entlang einer Förderrichtung (14) bewegt wird, umfassend:
- eine in einer induktiven Messebene angeordnete induktive Messeinrichtung zur Ermittlung der Lage des Leiters in der induktiven Messebene,
- mindestens eine in einer ersten optischen Messebene, die in Förderrichtung (14) des Stranges vor der induktiven Messebene liegt, angeordnete erste optische Messeinrichtung (16) zur Ermittlung der Lage des Stranges (28) in der ersten optischen Messebene,
- mindestens eine in einer zweiten optischen Messebene, die in Förderrichtung (14) des Stranges (28) hinter der induktiven Messebene liegt, angeordnete zweite optische Messeinrichtung (18) zur Ermittlung der Lage des Stranges (28) in der zweiten optischen Messebene,
- eine Auswerteeinrichtung (20), die dazu ausgebildet ist, die in der ersten und zweiten optischen Messebene ermittelten Lagen des Stranges (28) derart miteinander in Beziehung zu setzen, dass sich eine Lage des Stranges (28) in der induktiven Messebene ergibt, und aus dieser sich ergebenden Lage des Stranges (28) in der induktiven Messebene und aus der in der induktiven Messebene ermittelten Lage des Leiters die Zentrizität des Leiters in der Isolierumhüllung zu bestimmen,
- wobei die mindestens eine erste optische Messeinrichtung (16) und/oder die mindestens eine zweite optische Messeinrichtung (18) dazu ausgebildet sind, in der ersten optischen Messebene und/oder in der zweiten optischen Messebene eine ortsaufgelöste optische Messung einerseits senkrecht zur Förderrichtung und andererseits in Förderrichtung derart durchzuführen, dass eine Schräglage und/oder eine Krümmung des Stranges (28) gegenüber der Förderrichtung (14) in der ersten optischen Messebene und/oder in der zweiten optischen Messebene erkannt wird, und wobei die Auswerteeinrichtung (20) weiter dazu ausgebildet ist, eine solche Schräglage und/oder Krümmung bei der Bestimmung der Zentrizität des Leiters in der Isolierumhüllung zu berücksichtigen.

13. Vorrichtung nach Anspruch 12, **dadurch gekennzeichnet, dass** die Auswerteeinrichtung (20) weiter dazu ausgebildet ist, das Verfahren nach einem der Ansprüche 1 bis 7 durchzuführen.

14. Vorrichtung nach einem der Ansprüche 12 oder 13, **dadurch gekennzeichnet, dass** die induktive Messebene und/oder die erste optische Messebene und/oder die zweite optische Messebene senkrecht zu der Förderrichtung (14) des Stranges (28) liegen.

15. Vorrichtung nach einem der Ansprüche 12 bis 14, **dadurch gekennzeichnet, dass** weiterhin mehrere Stützelemente, vorzugsweise mehrere Stützrollen, vorgesehen sind, die den Strang (28) entlang seiner Förderrichtung (14) abstützen, wobei die der induktiven Messebene unmittelbar vorausgehenden und unmittelbar nachfolgenden Stützelemente spiegelsymmetrisch zu der induktiven Messebene angeordnet sind.

16. Vorrichtung nach einem der Ansprüche 12 bis 15, **dadurch gekennzeichnet, dass** die mindestens eine erste optische Messeinrichtung (16) und/oder die mindestens eine zweite Messeinrichtung (18) mindestens eine optische Strahlungsquelle und mindestens einen zweidimensional ortsauflösenden optischen Sensor umfassen.

17. Vorrichtung nach einem der Ansprüche 12 bis 16, **dadurch gekennzeichnet, dass** die induktive Messeinrichtung mindestens zwei induktive Messspulen (10, 12) umfasst, die in der induktiven Messebene paarweise zueinander angeordnet sind.

## Claims

1. A method for measuring the centricity of a conductor in an insulation sleeve, in which the string (28) formed by the conductor with its insulation sleeve is moved along a conveying direction (14), comprising the following steps:
- in an inductive measuring plane, the position of the conductor is determined by means of an inductive measuring apparatus,
- in a first optical measuring plane, which lies in the conveying direction (14) of the string (28) in front of the inductive measuring plane, the position of the string (28) is determined by means of at least one first optical measuring apparatus (16),
- in a second optical measuring plane, which lies in the conveying direction (14) of the string (28) behind the inductive measuring plane, the position of the string (28) is determined by means of at least one second optical measuring apparatus (18),
- the positions of the string (28) determined in the first and second optical measuring plane are correlated such that a position of the string (28) in the inductive measuring plane results, and
- from this resulting position of the string (28) in the inductive measuring plane and from the position of the conductor determined in the inductive measuring plane, the centricity of the conductor in the insulation sleeve is determined,
- wherein, in the first optical measuring plane and/or in the second optical measuring plane, a spatially resolved optical measurement takes place on the one hand perpendicular to the conveying direction and on the other hand in the conveying direction, such that a sloping position and/or a curvature of the string (28) with respect to the conveying direction (14) is identified in the first optical measuring plane and/or in the second optical measuring plane, wherein such a sloping position and/or curvature is taken into account during the determination of the centricity of the conductor in the insulation sleeve.

2. The method according to claim 1, **characterised in that** a spatially resolved optical measurement takes place in the first optical measuring plane and in the second optical measuring plane respectively, such that a sloping position and/or a curvature of the string with respect to the conveying direction, is identified, particularly in the first optical measuring plane and in the second measuring plane.

3. The method according to claim 1 or claim 2, **characterised in that**, based on a sloping position and/or curvature of the string (28) with respect to the conveying direction (14), which is identified in the first optical measuring plane and/or in the second optical measuring plane, a corrected position of the string (28) in the inductive measuring plane is created, based on which the centricity of the conductor in the insulation sleeve is determined.

4. The method according to one of the previous claims, **characterised in that**, from the optical measurement performed in the first optical measuring plane and/or in the second optical measuring plane, a curvature radius or curvature diameter of the string (28) is determined, based on which the corrected position of the string (28) in the inductive measuring plane is created.

5. The method according to claim 4, **characterised in that** the curvature radius or curvature diameter of the string (28) is determined by a circle being formed, for which curvatures of the string (28), which are identified in the first optical measuring plane and/or in the second optical measuring plane, form circular-arc segments, wherein the radius or diameter of the corresponding circle is selected as curvature radius or curvature diameter.

6. The method according to claim 5, **characterised in that** a point of intersection of two radial lines to the identified curvatures of the string (28) in the first optical measuring plane and/or in the second optical measuring plane is selected as centre point of the circle.

7. The method according to one of claims 4 to 6, **characterised in that** the curvature radius or curvature diameter is determined for a sloping position of the string (28) identified in the first optical measuring plane and/or in the second optical measuring plane, by a perpendicular line being created respectively on the determined sloping positions of the string (28) and the point of intersection of the perpendicular lines being selected as the centre point of a circle for which the determined sloping positions of the string (28) form tangents or chords, wherein the radius or diameter of this circle is selected as curvature radius or curvature diameter.

8. The method according to one of the previous claims, **characterised in that** the inductive measuring plane and/or the first optical measuring plane and/or the second optical measuring plane lie perpendicular to the conveying direction (14) of the string (28).

9. The method according to one of the previous claims, **characterised in that** the string (28) is supported along its conveying direction (14) by a plurality of support members, preferably a plurality of support rollers, wherein the support members immediately preceding and immediately following the inductive measuring plane are arranged mirror-symmetrical to the inductive measuring plane.

10. The method according to one of the previous claims, **characterised in that** the at least one first optical measuring apparatus (16) and/or the at least one second optical measuring apparatus (18) comprise at least one optical radiation source and at least one two-dimensionally spatially resolving optical sensor.

11. The method according to one of the previous claims, **characterised in that** the inductive measuring apparatus comprises at least two inductive measuring coils (10, 12) which are arranged in pairs relative to each other in the inductive measuring plane.

12. A device for measuring the centricity of a conductor in an insulating sleeve, in which the string (28) formed by the conductor with its insulation sleeve is moved along a conveying direction (14), comprising:
- an inductive measuring apparatus arranged in an inductive measuring plane, for determining the position of the conductor in the inductive measuring plane,
- at least one first optical measuring apparatus (16) arranged in a first optical measuring plane, which lies in the conveying direction (14) of the string in front of the inductive measuring plane, for determining the position of the string (28) in the first optical measuring plane,
- at least one second optical measuring apparatus (18) arranged in a second optical measuring plane, which lies in the conveying direction (14) of the string (28) behind the inductive measuring plane, for determining the position of the string (28) in the second optical measuring plane,
- an evaluation apparatus (20), which is designed to correlate the positions of the string (28) determined in the first and second optical measuring plane, such that a position of the string (28) in the inductive measuring plane results and, from this resulting position of the string (28) in the inductive measuring plane and from the position of the conductor determined in the inductive measuring plane, to determine the centricity of the conductor in the insulation sleeve,
- wherein the at least one first optical measuring apparatus (16) and/or the at least one second optical measuring apparatus (18) are designed to perform a spatially resolved optical measurement in the first optical measuring plane and/or in the second optical measuring plane, on the one hand perpendicular to the conveying direction and on the other hand in the conveying direction, such that a sloping position and/or curvature of the string (28) with respect to the conveying direction (14) is identified in the first optical measuring plane and/or in the second optical measuring plane, and wherein the evaluation apparatus (20) is further designed to take account of such a sloping position and/or curvature during the determination of the centricity of the conductor in the insulation sleeve.

13. The device according to claim 12, **characterised in that** the evaluation apparatus (20) is further designed to perform the method according to one of claims 1 to 7.

14. The device according to one of claims 12 or 13, **characterised in that** the inductive measuring plane and/or the first optical measuring plane and/or the second optical measuring plane lie perpendicular to the conveying direction (14) of the string (28).

15. The device according to one of claims 12 to 14, **characterised in that** moreover a plurality of support members, preferably a plurality of support rollers, are provided, which support the string (28) along its conveying direction (14), wherein the support members immediately preceding and immediately following the inductive measuring plane are arranged mirror-symmetrical to the inductive measuring plane.

16. The device according to one of claims 12 to 15, **characterised in that** the at least one first optical measuring apparatus (16) and/or the at least one second optical measuring apparatus (18) comprise at least one optical radiation source and at least one two-dimensionally spatially resolving optical sensor.

17. The device according to one of claims 12 to 16, **characterised in that** the inductive measuring apparatus comprises at least two inductive measuring coils (10, 12), which are arranged in pairs relative to each other in the inductive measuring plane.

## Revendications

1. Procédé de mesure de la centricité d'un conducteur dans une gaine isolante, dans lequel le cordon (28) formé par le conducteur avec sa gaine isolante est déplacé le long d'une direction de transport (14), comprenant les étapes suivantes :
- dans un plan de mesure inductif, la position du conducteur est détectée au moyen d'un dispositif de mesure inductif,
- dans un premier plan de mesure optique s'étendant en amont du plan de mesure inductif dans la direction de transport (14) du cordon (28), la position du cordon (28) est détectée au moyen d'au moins un premier dispositif de mesure optique (16),
- dans un deuxième plan de mesure optique s'étendant en aval du plan de mesure inductif dans la direction de transport (14) du cordon (28), la position du cordon (28) est détectée au moyen d'au moins un deuxième dispositif de mesure optique (18),
- les positions du cordon (28) détectées dans le premier et le deuxième plan de mesure optique sont mises en relation de façon à obtenir une position du cordon (28) dans le plan de mesure inductif, et
- la centricité du conducteur dans la gaine isolante est déterminée à partir de cette position du cordon (28) obtenue dans le plan de mesure inductif et à partir de la position du conducteur détectée dans le plan de mesure inductif,
- dans lequel, dans le premier plan de mesure optique et/ou dans le deuxième plan de mesure optique, une mesure optique à résolution spatiale est effectuée d'une part perpendiculairement à la direction de transport (14) et d'autre part dans la direction de transport (14), de façon à détecter une position inclinée et/ou une courbure du cordon (28) par rapport à la direction de transport (14) dans le premier plan de mesure optique et/ou dans le deuxième plan de mesure optique, une telle position inclinée et/ou courbure étant prise en compte dans la détermination de la centricité du conducteur dans la gaine isolante.

2. Procédé selon la revendication 1, **caractérisé en ce qu'**une mesure optique à résolution spatiale est effectuée respectivement dans le premier plan de mesure optique et dans le deuxième plan de mesure optique, de façon à détecter une position inclinée et/ou une courbure du cordon par rapport à la direction de transport, en particulier dans le premier plan de mesure optique et dans le deuxième plan de mesure optique.

3. Procédé selon la revendication 1 ou la revendication 2, **caractérisé en ce que** sur la base d'une position inclinée et/ou d'une courbure du cordon (28) par rapport à la direction de transport (14) détectée(s) dans le premier plan de mesure optique et/ou dans le deuxième plan de mesure optique, une position corrigée du cordon (28) est établie dans le plan de mesure inductif, sur la base de laquelle la centricité du conducteur dans la gaine isolante est déterminée.

4. Procédé selon l'une des revendications précédentes, **caractérisé en ce qu'**à partir de la mesure optique effectuée dans le premier plan de mesure optique et/ou dans le deuxième plan de mesure optique, un rayon de courbure ou un diamètre de courbure du cordon (28) est déterminé, sur la base duquel la position corrigée du cordon (28) dans le plan de mesure inductif est établie.

5. Procédé selon la revendication 4, **caractérisé en ce que** le rayon de courbure ou le diamètre de courbure du cordon (28) est déterminé en formant un cercle, par rapport auquel des courbures du cordon (28) détectées dans le premier plan de mesure optique et/ou dans le deuxième plan de mesure optique forment des segments d'arc de cercle, le rayon ou diamètre du cercle correspondant étant choisi en tant que rayon de courbure ou diamètre de courbure.

6. Procédé selon la revendication 5, **caractérisé en ce qu'**une intersection de deux lignes radiales par rapport aux courbures du cordon (28) dans le premier plan de mesure optique et/ou dans le deuxième plan de mesure optique est choisie en tant que centre du cercle.

7. Procédé selon l'une des revendications 4 à 6, **caractérisé en ce que** le rayon de courbure ou le diamètre de courbure est déterminé pour une position inclinée du cordon (28) détectée dans le premier plan de mesure optique et/ou dans le deuxième plan de mesure optique, en définissant respectivement une ligne perpendiculaire aux positions inclinées déterminées du cordon (28), et en choisissant l'intersection des lignes perpendiculaires en tant que centre d'un cercle par rapport auquel les positions inclinées déterminées du cordon (28) forment des tangentes ou des cordes, le rayon ou le diamètre de ce cercle étant choisi en tant que rayon de courbure ou diamètre de courbure.

8. Procédé selon l'une des revendications précédentes, **caractérisé en ce que** le plan de mesure inductif et/ou le premier plan de mesure optique et/ou le deuxième plan de mesure optique s'étendent perpendiculairement à la direction de transport (14) du cordon (28).

9. Procédé selon l'une des revendications précédentes, **caractérisé en ce que** le cordon (28) est soutenu par plusieurs éléments d'appui, de préférence plusieurs rouleaux d'appui, le long de sa direction de transport (14), les éléments d'appui précédant immédiatement ou suivant immédiatement le plan de mesure inductif étant disposés symétriquement par rapport au plan de mesure inductif.

10. Procédé selon l'une des revendications précédentes, **caractérisé en ce que** l'au moins un premier dispositif de mesure optique (16) et/ou l'au moins un deuxième dispositif de mesure optique (18) comportent au moins une source de rayonnement optique et au moins un capteur optique à résolution spatiale bidimensionnel.

11. Procédé selon l'une des revendications précédentes, **caractérisé en ce que** le dispositif de mesure inductif comporte au moins deux bobines de mesure inductives (10, 12), lesquelles sont agencées par paires dans le plan de mesure inductif.

12. Dispositif de mesure de la centricité d'un conducteur dans une gaine isolante, dans lequel le cordon (28) formé par le conducteur avec sa gaine isolante est déplacé le long d'une direction de transport (14), comprenant :
- un dispositif de mesure inductif agencé dans un plan de mesure inductif, pour détecter la position du conducteur dans le plan de mesure inductif,
- au moins un premier dispositif de mesure optique (16) agencé dans un premier plan de mesure optique s'étendant en amont du plan de mesure inductif dans la direction de transport (14) du cordon, pour détecter la position du cordon (28) dans le premier plan de mesure optique,
- au moins un deuxième dispositif de mesure optique (18) agencé en aval du plan de mesure inductif dans la direction de transport (14) du cordon (28), pour détecter la position du cordon (28) dans le deuxième plan de mesure optique,
- un dispositif d'évaluation (20) conçu pour mettre en relation les positions du cordon (28) détectées dans le premier et le deuxième plan de mesure optique, de manière à obtenir une position du cordon (28) dans le plan de mesure inductif, et pour déterminer la centricité du conducteur dans la gaine isolante à partir de cette position du cordon (28) obtenue dans le plan de mesure inductif et à partir de la position du conducteur détectée dans le plan de mesure inductif,
- dans lequel l'au moins un premier dispositif de mesure optique (16) et/ou l'au moins un deuxième dispositif de mesure optique (18) sont conçus pour effectuer une mesure optique à résolution spatiale dans le premier plan de mesure optique et/ou dans le deuxième plan de mesure optique, d'une part perpendiculairement à la direction de transport et d'autre part dans la direction de transport, de façon à détecter une position inclinée et/ou une courbure du cordon (28) par rapport à la direction de transport (14) dans le premier plan de mesure optique et/ou dans le deuxième plan de mesure optique, le dispositif d'évaluation (20) étant en outre conçu pour tenir compte d'une telle position inclinée et/ou courbure lors de la détermination de la centricité du conducteur dans la gaine isolante.

13. Dispositif selon la revendication 12, **caractérisé en ce que** le dispositif d'évaluation (20) est en outre conçu pour mettre en oeuvre le procédé selon l'une des revendications 1 à 7.

14. Dispositif selon l'une des revendications 12 ou 13, **caractérisé en ce que** le plan de mesure inductif et/ou le premier plan de mesure optique et/ou le deuxième plan de mesure optique s'étendent perpendiculairement à la direction de transport (14) du cordon (28).

15. Dispositif selon l'une des revendications 12 à 14, **caractérisé en ce qu'**il est en outre prévu plusieurs éléments d'appui, de préférence plusieurs rouleaux d'appui, permettant de soutenir le cordon (28) le long de sa direction de transport (14), les éléments d'appui précédant immédiatement ou suivant immédiatement le plan de mesure inductif étant disposés symétriquement par rapport au plan de mesure inductif.

16. Dispositif selon l'une des revendications 12 à 15, **caractérisé en ce que** l'au moins un premier dispositif de mesure optique (16) et/ou l'au moins un deuxième dispositif de mesure optique (18) comportent au moins une source de rayonnement et au moins un capteur optique à résolution spatiale bidimensionnel.

17. Dispositif selon l'une des revendications 12 à 16, **caractérisé en ce que** le dispositif de mesure inductif comporte au moins deux bobines de mesure inductives (10, 12) agencées par paires dans le plan de mesure inductif.
